# EUROPÄISCHE PATENTSCHRIFT

(11) **EP 0 427 111 B1**
(45) Veröffentlichungstag und Bekanntmachung des Hinweises auf die Patenterteilung: **14.01.1998**
(21) Anmeldenummer: 90120929.6
(22) Anmeldetag: 31.10.1990
(51) Int. Cl.: B29C 70/02, E04C 5/07

(54) **Verfahren zum Herstellen von rauhen Bewehrungseinlagen aus Faserverbundwerkstoffen für Betonbauwerke**
Method of manufacturing roughened fibre reinforcing elements for concrete structures
Procédé de préparation d'un élément de renforcement fibreux à surfaces rugueuse pour le béton

(30) Priorität: 08.11.1989 DE 3937196
(43) Veröffentlichungstag der Anmeldung: 15.05.1991
(73) Patentinhaber: SPORTEX GMBH & CO., 89231 Neu-Ulm (DE)
(72) Erfinder: Wolff, Reinhard, Dr.-Ing., W-5000 Köln 91 (DE); Stieler, Jürgen, W-7910 Neu-Ulm (DE); Miesseler, Hans-Joachim, Dipl.-Ing., W-5000 Köln 91 (Porz) (DE); Klinkisch, Peter Julius, W-7910 Neu-Ulm (DE)
(74) Vertreter: Geyer, Werner, Dr.-Ing.

(56) Entgegenhaltungen:
- EP-A- 0 223 291
- DE-A- 3 032 533
- GB-A- 917 147
- GB-A- 2 137 304
- US-A- 4 648 224

## Beschreibung

Die Erfindung bezieht sich auf ein Verfahren zur Herstellung rauher Bewehrungseinlagen aus Faserverbundwerkstoffen für Betonbauwerke, bei dem eine Vielzahl von Verstärkungsfasern unidirektional in eine Matrix aus Kunstharz eingebettet, diese zusammen mit den Verstärkungsfasern durch Wärmeeinwirkung in einer Heizstrecke zu einem faserverstärkten Kunststoffkern ausgehärtet und noch durch Auftragen von heißvernetzbarem duroplastischen Kunststoff mit einer Kunststoff-Überzugsschicht versehen wird, wobei auf die Oberfläche der Kunststoff-Überzugsschicht, solange diese noch klebrig ist, ein Pulver oder ein feinkörniges Granulat zur Ausbildung eines Rauhbelages aufgebracht und die Pulver- bzw. Granulatkörner durch teilweises Eindringen in die Überzugsschicht in dieser verankert werden.

Bewehrungsanlagen aus faserverstärkten Kunststoffen weisen gegenüber kunststoffummantelten Stahlteilen ganz erhebliche Vorteile auf, die insbesondere in den gewichtsbezogenen Festigkeits- und Steifigkeitseigenschaften dieser Werkstoffe liegen. Wenn dabei die Verstärkungsfasern weitgehend in der Beanspruchungsrichtung orientiert werden, lassen sich hochfeste Bauteile geringen Gewichtes erreichen, die insbesondere bei Verwendung der billigen Glasfasern relativ kostengünstig realisierbar sind.

Bei einem bekannten Verfahren der eingangs genannten Art (Artikel von H.-J. Mießeler und Lothar Preis, "Hochleistungsverbundstäbe aus Glasfasern als Bewehrung im Beton- und Erdbau", Zeitschrift "Bauen mit Kunststoff" 2/1988, S. 4-14) werden zunächst kontinuierlich Glasfaserverbundstäbe in Form eines Faserbündels hergestellt, das aus mit dem Matrixkunstharz imprägnierten, unidirektional ausgerichteten, nebeneinanderliegenden und mit Umwindefasern umwickelten Glasfasersträngen besteht. Der so entstandene GFK-Verbundstab wird sodann mittels Wärmeeinwirkung ausgehärtet und zum Erzielen der gewünschten Medienbeständigkeit mit einer thermoplastischen Beschichtung aus einem hochgefüllten Polyamid 6 überzogen. Hierdurch lassen sich GFK-Bewehrungseinlagen sehr guter Tragfähigkeit schaffen, die gegenüber vorbekannten Bewehrungseinlagen eine erhöhte Medienbeständigkeit und ein verbessertes Verbundverhalten aufweisen. Es hat sich dabei allerdings gezeigt, daß der Thermoplast-Überzug noch immer nur relativ geringe Schubspannungen übertragen kann, weshalb insgesamt bei einem Verbund mit Beton oder Mörtel doch nur kleine Verbundkräfte übertragen werden können und solche Bewehrungseinlagen deshalb dann nicht zum Einsatz gelangen können, wenn es um die Übertragbarkeit nennenswerter Verbund- bzw. Schubkräfte geht. Auch ist die Schubtragfähigkeit der Beschichtung, insbesondere im Bereich der Krafteinleitung, nicht immer zufriedenstellend, weshalb häufig die Schicht im Bereich der Endverankerung entfernt werden muß, um hier eine Verbesserung bei der Einbettung zu erreichen. Darüberhinaus weist der thermoplastische (Polyamid-)Überzug eine relativ große Kriechneigung auf, was insbesondere bei feuchter Umgebung, etwa bei Einsatz als Erdanker, signifikant hervortritt ("Verbundkriechen"). Infolge ihrer geringen Verbundtragfähigkeit sind die mit dem bekannten Verfahren hergestellten Bewehrungseinlagen zur Vorspannung mit sofortigem Verbund nicht geeignet.

Ein Verfahren der eingangs genannten Art ist aus der US-A-4 648 224 bekannt. Bei diesem bekannten Verfahren wird eine Heißaushärtung des Kunststoffkernes vor dem Aufbringen der Kunststoff-Überzugsschicht vorgenommen und danach eine dünne Schicht von Kunststoffmaterial auf den ausgehärteten Stab zur Ausbildung einer Kunststoff-Überzugsschicht aufgebracht, die dann ihrerseits auf dem bereits vorher ausgehärteten Kunststoffkern aushärtet. Die Verbindung zwischen der Überzugsschicht und dem Kunststoffkern ist bei solchermaßen erzeugten Bewehrungseinlagen jedoch dann, wenn es auf eine besonders innige Verbindung zur Übertragung erheblicher Kräfte ankommt, nicht immer ausreichend.

Ausgehend hiervon liegt der Erfindung die Aufgabe zugrunde, ein Verfahren der eingangs genannten Art so weiterzuentwickeln, daß die damit hergestellten Bewehrungseinlagen eine deutlich verbesserte Verbund- bzw. Schubtragfähigkeit aufweisen und insbesondere auch für einen Einsatz zur Vorspannung mit sofortigem Verbund geeignet sind.

Erfindungsgemäß wird dies bei einem Verfahren der eingangs genannten Art dadurch erreicht, daß während des Hindurchführens des Kunststoffkernes durch die Heizstrecke auf dessen Oberfläche, wenn diese noch klebrig ist, bei einer Temperatur zwischen 180° C und 230° C der heißvernetzbare duroplastische Kunststoff in einer Schichtdicke von mindestens 180µm aufgetragen, anschließend der so beschichtete Kunststoffkern zur fortgesetzten Aushärtung durch eine weitere Heizstrecke geführt und hiernach das Pulver bzw. Granulat für den Rauhbelag aus mineralischem Material oder thermoplastischem oder duroplastischem Kunststoff auf die Überzugsschicht aufgebracht wird.

Das erfindungsgemäße Verfahren führt zu Bewehrungseinlagen mit einer deutlich erhöhten, für den Einsatzzweck solcher Bewehrungseinlagen ausreichend lange und sicher wirksamen Medienbeständigkeit gegenüber dem Zutritt agressiver alkalischer Medien, wie sie beim Einsatz im Spannbetonbau auftreten können. Die durch das erfindungsgemäße Verfahren erzeugten Bewehrungseinlagen erweisen sich auch für die Übertragbarkeit nennenswerter Verbund- bzw. Schubkräfte geeignet, wobei sich eine deutlich verbesserte Schubtragfähigkeit der Beschichtung insbesondere im Bereich der Krafteinleitung ergibt. Ein Entfernen der Schicht im Bereich der Endverankerung erübrigt sich und die durch das erfindungsgemäße Verfahren erzeugten Bewehrungseinlagen lassen einen Einsatz zur Vorspannung mit sofortigen Verbund ohne weiteres zu. Der beim erfindungsgemäßen Verfahren aufgebrachte Kunststoffüberzug aus heiß-vernetzbarem duroplastischem Kunststoff mit einer Dicke von mindestens 180µm ist vergleichsweise dünn, wobei dennoch die angegebenen Mindest-Schichtdicke bei diesem Material eine ausreichend sichere Sperre gegen den Zutritt alkalihaltiger Stoffe zu den Glasfasern im Kern ausbildet. Durch das erfindungsgemäße Verfahren werden Bewehrungseinlagen mit einem Rauhbelag erzeugt, der sich besonders gut in das ihn umgebende Material einzubetten vermag und dadurch eine erhebliche Steigerung in der Übertragbarkeit der Verbundkräfte gewährleistet. Gleichzeitig wird jedoch durch die beim erfindungsgemäßen Verfahren erreichte Abstimmung der Wärmetönung des Kernharzes bzw. der sich daraus ergebenden Oberflächentemperatur des Kernstrangs und der Verarbeitungstemperatur des Beschichtungsmaterials beim Auftrag eine innige Verbindung zwischen Überzugsschicht und Kernmatrix herbeigeführt, die, anders als beim Aufbringen eines Überzugs auf einen vorher erhärteten Kernstrang oder einen metallischen Kern, eine signifikant verbesserte Verbindung zwischen Beschichtung und Kernmaterial gewährleistet. Für diese gute und innige Verbindung sind freie Valenzen des verwendeten Matrix-Kunststoffs an der Oberfläche des Kernstrangs verantwortlich, die dort zu der außerordentlich guten Verbindung mit dem Beschichtungsmedium führen.

Die beim erfindungsgemäßen Verfahren aufgebrachte duroplastische Kunststoff-Überzugsschicht führt zu einer guten Oberflächengestaltung der fertigen Bewehrungseinlage und sichert eine nur geringe Feuchtigkeitsaufnahme der Beschichtung, was insbesondere bei feuchter Umgebung (z.B. Erdanker) wesentlich ist und gegenüber einer durch das gattungsgemäße Verfahren hergestellten Bewehrungseinlage eine erhebliche Herabsetzung des Verbundkriechens ergibt. Das durch das erfindungsgemäße Herstellungsverfahren erreichte verbesserte Verbundverhalten der damit erzeugten Bewehrungseinlagen ergab sich für den Fachmann als sehr überraschend.

Vorteilhafterweise wird beim erfindungsgemäßen Verfahren nach Durchlauf der weiteren Heizstrecke erneut eine Aufheizung des noch heißen beschichteten Kunststoffkernes zur Verflüssigung des Kunststoffes an der Oberfläche der Überzugsschicht vorgenommen und anschließend das Pulver bzw. Granulat auf diese Oberfläche aufgespritzt.

Besonders bevorzugt wird beim erfindungsgemäßen Verfahren ein Granulat eingesetzt, dessen maximale Korngröße nicht größer als 15 % des mittleren Kernstabdurchmessers des Kernstrangs beträgt (Durchmesserwert vor der Beschichtung gemessen), wobei ganz besonders bevorzugt Granulat mit Korngrößen zwischen 50µm und 500µm eingesetzt wird. Die Verwendung eines solchen Granulates führt bei der fertigen Bewehrungseinlage zu einem Rauhbelag, der besonders günstige Ergebnisse hinsichtlich Verbund- bzw. Schubfestigkeit liefert.

Beim erfindungsgemäßen Verfahren wird für die Kunststoffmatrix des Kerns bevorzugt ein Epoxidharz, vorzugsweise ein solches auf der Basis Bisphenol A oder Bisphenol F oder ein cykloaliphatisches Epoxidharz, verwendet. Hierdurch läßt sich eine besonders gute Beständigkeit gegen Säuren, wie sie bei Erdreichverankerungsn einwirken, erreichen.

In weiterer bevorzugter Ausgestaltung des erfindungsgemäßen Verfahrens kann jedoch für die Kunststoffmatrix des Kerns auch mit Vorteil ein Polyesterharz oder ein Vinylester-Harz eingesetzt werden, wobei, bevorzugt, Polyesterharze auf der Basis Isophtalsäure oder Terephtalsäure verwendet werden, die zu einer besonders guten Laugenbeständigkeit führen. Aber auch Acrylharze oder Phenolharze lassen sich in wiederum bevorzugter Ausgestaltung des erfindungsgemäßen Verfahrens für die Kunststoffmatrix des Kernes einsetzen, wobei diese Harze ebenfalls besonders säurebeständig sind.

Als Pulver bzw. Granulat, das auf die klebrige Oberfläche der aufschmelzenden Kunststoff-Überzugsschicht beim erfindungsgemäßen Verfahren aufgebracht wird und maßgeblich die Qualität des sich später einstellenden Rauhbelags bestimmt, kann Pulver bzw. Granulat unterschiedlichsten Materials eingesetzt werden. Besonders bevorzugt wird für die Überzugsschicht und das auf diese aufgebrachte Pulver bzw. Granulat jedoch ein heiß-vernetzbares Epoxidharz verwendet. Hervorragende Ergebnisse lassen sich auch erzielen, wenn als Pulver bzw. feinkörniges Granulat quarzitisches Material eingesetzt wird.

Beim erfindungsgemäßen Verfahren wird vorzugsweise der Kernstrang vor dem Aufbringen der Kunststoff-Überzugsschicht elektrostatisch aufgeladen, wodurch sich eine besonders gleichmäßige Ausbildung der Überzugsschicht auf dem Kernstrang erreichen läßt. Hierzu wird vorteilhafterweise das aufzubringende Material für die Kunststoff-Überzugsschicht auf den elektrostatisch aufgeladenen Kern aufgesprüht oder aufgeblasen.

Gleichermaßen vorzugsweise kann die Überzugsschicht auch durch Hindurchführen des warmen, aushärtenden Kunststoffkernes durch ein Bad mit fluidisiertem pulverförmigem Kunststoff aufgebracht werden.

Die Aufheizung des Kernstrangs auf die für das Aufbringen der Kunststoff-Überzugsschicht am Außenumfangs des Kernes erforderliche Temperatur kann in jeder geeigneten Art und Weise erfolgen. Ganz besonders bevorzugt wird jedoch hier die erforderliche Temperatur durch eine Mikrowellenerhitzung eingestellt, die eine genaue und gleichmäßige Temperatureinstellung an der Oberfläche des Kernstrangs ermöglicht, was für die Qualität der aufgebrachten Überzugsschicht wesentlich ist.

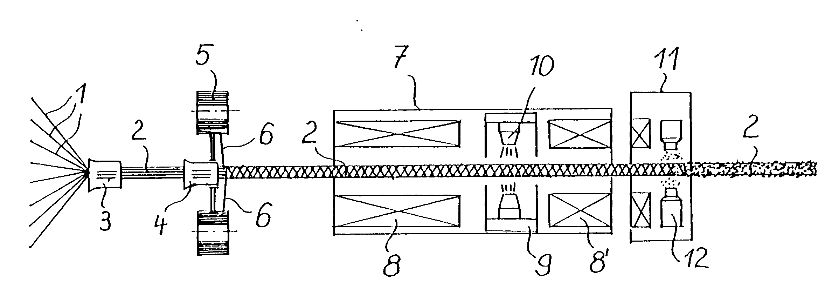

Das erfindungsgemäße Verfahren wird nachfolgend unter Bezugnahme auf die beigefügte Figur im Prinzip noch näher erläutert. Dabei zeigt die Figur eine schematische Darstellung des Verfahrensablaufs bei einem erfindungsgemäßen Verfahren.

Von einem (in der Figur nicht dargestellten) Zettelbaum aus wird eine Mehrzahl von Glasfaser-Rovings (2400 tex) abgezogen und anschließend (ebenfalls in der Figur nicht gezeigt) zum Imprägnieren durch ein Harzbad geführt, in dem flüssiges Epoxidharz auf der Basis Bisphenol A enthalten ist.

Die harzgetränkten Glasfaser-Rovings 1 werden sodann zu einem gemeinsamen Strang 2 in einer ersten Düse 3 zusammengeführt, wobei überschüssiges Harz abgestreift wird. In einem gewissen Abstand zur ersten Düse 3 ist eine zweite Düse 4 vorgesehen, durch die unter erneuter Harzabstreifung der zusammengeführte Faserstrang 2 hindurchgezogen und unmittelbar nach seinem Austreten aus ihr über eine umlaufende Wickeleinrichtung 5 mit Umwindefäden 6 in Kreuzwicklung unter Vorspannung umwickelt wird. Dabei befindet sich das Epoxidharz im Faserstrang 2 noch in flüssigem Zustand. Als Umwindegarn wird Glasfasergarn (68 tex oder 136 tex) eingesetzt. Die Vorspannung des Umwindegarnes wird so eingestellt, daß der Glasfaseranteil im umwundenen Faserstrang 2 unter 80 Vol.-% gehalten wird, und liegt im Bereich von 50cN bis 70cN.

Der so umwickelte Faserstrang 2 wird sodann in eine Heizstrecke 7 eingeleitet, in der er durch eine Infrarot- oder eine Mikrowellenheizung 8 erhitzt und dadurch der Aushärtungsprozeß des Epoxidharzes der Matrix ingang gesetzt wird. In der Heizstrecke 7 wird an einer Stelle, an der das Epoxidharz des Faserstranges 2 noch nicht vollständig ausgehärtet, sondern an der Strangoberfläche noch klebrig und dabei noch eine sehr gute Vernetzung des Epoxiharzes möglich ist, eine Beschichtungsstation 9 zwischengeschaltet, in der bei einer Oberflächentemperatur im Bereich zwischen 180°C und 230°C, bevorzugt bei 200°C, Beschichtungsmaterial aus einem heiß-vernetzbaren Epoxidharz mittels Sprühdüsen 10 auf den Faserstrang 2 aufgesprüht wird. Um einen gleichmäßigen Auftrag des Beschichtungsmateriales zu erreichen, wird der Strang am Einlauf zur Beschichtungsstation 9 elektrostatisch aufgeladen (in der Figur nicht dargestellt).

Nach dem Austritt aus der Beschichtungsstation 9 wird der Strang 2 dann zur fortgesetzten Aushärtung erneut in eine Heizstrecke 8′ geführt. Dem Ende der Heizstrecke 8′ ist eine Kabine 11 nachgeschaltet, in welcher der noch heiße Glasfaserstrang an seinem Außenumfang noch einmal kurz angeheizt und dadurch das Epoxidharz an der Strangoberfläche etwas verflüssigt wird, wonach mineralisches Granulat (aus demselben Werkstoff wie das in der Beschichtungsstation 9 aufgespritzte Beschichtungsmaterial oder aus einem anderen, thermoplastischen Material) einer Körnung zwischen 50µm und 100µM mittels um den Umfang des Kernes 2 verteilt angebrachter Sprühpistolen 12 auf die klebrige Strangoberfläche aufgesprüht wird. Der aus der Kabine 11 kontinuierlich austretende Glasfaserstrang 2 weist nunmehr an seiner Oberfläche eine Beschichtung in Form eines Rauhbelages auf. In nachgeschalteten Stationen wird der kontinuierlich angelieferte, ausgehärtete Glasfaserstrang 2 in geeignete Längen zerschnitten und abgelegt oder endlos aufgetrommelt.

## Patentansprüche

1. Verfahren zur Herstellung rauher Bewehrungseinlagen aus Faserverbundwerkstoffen für Betonbauwerke, bei dem eine Vielzahl von Verstärkungsfasern unidirektional in eine Matrix aus Kunstharz eingebettet, diese zusammen mit den Verstärkungsfasern durch Wärmeeinwirkung (8) in einer Heizstrecke (7) zu einem faserverstärkten Kunststoffkern ausgehärtet und noch durch Auftragen von heißvernetzbarem duroplastischem Kunststoff mit einer Kunststoff-Überzugsschicht versehen wird, wobei auf die Oberfläche der Kunststoff-Überzugsschicht, solange diese noch klebrig ist, ein Pulver oder ein feinkörniges Granulat zur Ausbildung eines Rauhbelages aufgebracht und die Pulver- bzw. Granulatkörner durch teilweises Eindringen in die Überzugsschicht in dieser verankert werden, **dadurch gekennzeichnet**, daß während des Hindurchführens des Kunststoffkernes durch die Heizstrecke (7) auf dessen Oberfläche, wenn diese noch klebrig ist, bei einer Temperatur zwischen 180°C und 230°C der heißvernetzbare duroplastische Kunststoff in einer Schichtdicke von mindestens 180 µm aufgetragen, anschließend der so beschichtete Kunststoffkern zur fortgesetzten Aushärtung durch eine weitere Heizstrecke geführt und hiernach das Pulver bzw. Granulat für den Rauhbelag aus mineralischem Material oder thermoplastischem oder duroplastischem Kunststoff auf die Überzugsschicht aufgebracht wird.

2. Verfahren nach Anspruch 1, dadurch gekennzeichnet, daß nach Durchlauf der weiteren Heizstrecke (8') erneut eine Aufheizung des noch heißen beschichteten Kunststoffkernes zur Verflüssigung des Kunststoffes an der Oberfläche der Überzugsschicht vorgenommen und anschließend das Pulver bzw. Granulat auf dieser Oberfläche aufgespritzt wird.

3. Verfahren noch Anspruch 1 oder 2, dadurch gekennzeichnet, daß bei Verwendung von Granulat dessen maximale Korngröße nicht größer als 15 % des mittleren Durchmessers des Kunststoffkernes beträgt.

4. Verfahren nach einem der Ansprüche 1 bis 3, dadurch gekennzeichnet, daß Granulat mit Korngrößen zwischen 50 µm und 500 µm eingesetzt wird.

5. Verfahren nach einem der Ansprüche 1 bis 3, dadurch gekennzeichnet, daß für die Matrix des Kunststoffkernes ein Epoxidharz, bevorzugt auf der Basis Bisphenol A oder Bisphenol F oder ein cycloaliphatisches Epoxidharz, eingesetzt wird.

6. Verfahren nach einem der Ansprüche 1 bis 4, dadurch gekennzeichnet, daß für die Matrix des Kunststoffkernes ein Polyesterharz, ein Vinylesterharz, ein Acrylharz oder ein Phenolharz eingesetzt wird.

7. Verfahren nach einem der Ansprüche 1 bis 6, dadurch gekennzeichnet, daß für die Überzugsschicht und das auf diese aufgebrachte Pulver bzw. Granulat der gleiche Kunststoff, bevorzugt ein heiß-vernetzbares Epoxidharz, eingesetzt wird.

8. Verfahren nach einem der Ansprüche 1 bis 7, dadurch gekennzeichnet, daß als Pulver bzw. feinkörniges Granulat quarzitisches Material eingesetzt wird.

9. Verfahren nach einem der Ansprüche 1 bis 8, dadurch gekennzeichnet, daß der faserverstärkte Kunststoffkern vor dem Aufbringen der Kunststoff-Überzugsschicht elektrostatisch aufgeladen wird.

10. Verfahren nach Anspruch 9, dadurch gekennzeichnet, daß das Material für die Kunststoff-Überzugsschicht auf den elektrostatisch aufgeladenen faserverstärkten Kunststoffkern aufgesprüht oder aufgeblasen wird.

11. Verfahren nach einem der Ansprüche 1 bis 10, dadurch gekennzeichnet, daß die für das Aufbringen der Kunststoff-Überzugsschicht am Außenumfang des faserverstärkten Kunststoffkernes erforderliche Temperatur durch Mikrowellenerhitzung eingestellt wird.

12. Verfahren nach einem der Ansprüche 1 bis 11, dadurch gekennzeichnet, daß die Kunststoff-Überzugsschicht durch Hindurchführen des warmen, aushärtenden Kunststoffkernes durch ein Bad mit fluidisiertem pulverförmigem Kunststoff aufgebracht wird.

## Claims

1. Method of manufacturing roughened fibre reinforcing elements for concrete structures, in which a plurality of reinforcing fibres is embedded in one direction in a synthetic resin matrix, the matrix is cured together with the reinforcing fibres by the action of heat (8) in a heating zone (7) to form a fibre-reinforced plastic core and is also provided with a plastic coating layer by application of hot-crosslinkable thermosetting plastic, a powder or fine-particled granulate being applied to the surface of this plastic coating layer while it is still tacky to form a rough covering and the particles of powder or granulate being secured in the coating layer by partial penetration therein, characterised in that, during the passage of the plastic core through the heating zone (7), the hot-crosslinkable thermosetting plastic is applied in a layer thickness of at least 180 µm to the surface thereof while it is still tacky at a temperature between 180°C and 230°C, the plastic core coated in this way is then guided through a further heating zone for continued curing and the powder or granulate is then applied to the coating layer for the rough covering of mineral material or thermoplastic or thermosetting resin.

2. Method according to claim 1, characterised in that, after passage through the further heating zone (8'), the still hot coated plastic core is reheated to liquefy the plastic on the surface of the coating layer and the powder or granulate is then sprayed on this surface.

3. Process according to claim 1 or 2, characterised in that when granulate is used, its maximum particle size is not greater than 15% of the average diameter of the plastic core.

4. Method according to one of claims 1 to 3, characterised in that granulate having particle sizes between 50 µm and 500 µm is used.

5. Method according to one of claims 1 to 3, characterised in that an epoxy resin, preferably based on bisphenol A or bisphenol F or a cycloaliphatic epoxy resin, is used for the matrix of the plastic core.

6. Method according to one of claims 1 to 4, characterised in that a polyester resin, a vinylester resin, an acrylic resin or a phenolic resin is used for the matrix of the plastic core.

7. Method according to one of claims 1 to 6, characterised in that the same plastic, preferably a hot-crosslinkable epoxy resin, is used for the coating layer and the powder or granulate applied thereto.

8. Method according to one of claims 1 to 7, characterised in that quartzitic material is used as powder or fine-particled granulate.

9. Method according to one of claims 1 to 8, characterised in that the fibre-reinforced plastic core is electrostatically charged prior to application of the plastic coating layer.

10. Method according to claim 9, characterised in that the material for the plastic coating layer is sprayed or blown onto the electrostatically charged fibre-reinforced plastic core.

11. Method according to one of claims 1 to 10, characterised in that the temperature required at the outer periphery of the fibre-reinforced plastic core for application of the plastic coating layer is adjusted by microwave heating.

12. Method according to one of claims 1 to 11, characterised in that the plastic coating layer is applied by passing the warm, curing plastic core through a bath of fluidised powdered plastic.

## Revendications

1. Procédé de préparation d'éléments d'armature rugueux à partir de matériaux composites fibreux, pour des ouvrages en béton, dans lequel une pluralité de fibres de renforcement est noyée de façon unidirectionnelle dans une matrice de résine synthétique, celle-ci, conjointement avec les fibres de renforcement étant durcie par effet de chaleur (8) dans une veine de chauffage (7) pour donner un noyau de matière synthétique renforcé par des fibres et étant encore pourvu d'une couche de revêtement en matière synthétique, par application d'une matière synthétique thermodurcissable pouvant réticuler à chaud, où sur la surface de la couche de revêtement en matière synthétlque, tant que celle-ci est encore collante, est appliqué(e) une poudre ou bien un granulat à grains fins, pour constituer un revêtement rugueux et les grains de poudre ou de granulat étant ancrés dans la couche de revêtement par pénétration partielle dans celle-ci, caractérisé en ce que, pendant le passage du noyau en matière synthétique dans la veine de chauffage (7), sur sa surface lorsque celle-ci est encore collante, la matière synthétique thermodurcissable pouvant réticuler à chaud est appliquée, à une température comprise dans la plage allant de 180 °C à 230 °C, suivant une épaisseur de couche minimale de 180 µm, puis le noyau en matière synthétique ainsi revêtu est passé, pour continuer le durcissement dans une autre veine de chauffage et, à la suite de cela, la poudre ou le granulat, destiné(e) au revêtement rugueux et constitué(e) d'un matériau minéral ou d'une matière synthétique thermoplastique ou thermodurcissable, est appliqué(e) sur la couche de revêtement.

2. Procédé selon la revendication 1, caractérisé en ce que, après passage dans la veine de chauffage (8') supplémentaire, est effectué de nouveau un chauffage du noyau de matière synthétique revêtu encore chaud, visant à liquéfier la matière synthétique se trouvant sur la surface de la couche de revêtement, puis la poudre ou le granulat est appliqué(e) par pulvérisation sur cette surface.

3. Procédé selon la revendication 1 ou 2, caractérisé en ce que, en cas d'utilisation de granulat, sa taille de grains maximale ne dépasse pas 15 % du diamètre moyen du noyau de matière synthétique.

4. Procédé selon l'une des revendications 1 à 3, caractérisé en ce qu'est utilisé du granulat ayant des tailles de grains comprises dans la plage allant de 50 µm à 500 µm.

5. Procédé selon l'une des revendications 1 à 3, caractérisé en ce que pour la matrice du noyau en matière synthétique est utilisée une résine époxyde, de préférence à base de bisphénol A ou de bisphénoi F, ou bien une résine époxyde cycloaliphatique.

6. Procédé selon l'une des revendications 1 à 4, caractérisé en ce qu'une résine polyester, une résine vinylester, une résine acrylique ou une résine phénol est utilisée pour la matrice du noyau en matière synthétique.

7. Procédé selon l'une des revendications 1 à 6, caractérisé en ce que la même matière synthétique, de préférence une résine époxy réticulable à chaud, est utilisée pour la couche de revêtement, et la poudre ou le granulat appliqué(e) sur celle-ci.

8. Procédé selon l'une des revendications 1 à 7, caractérisé en ce que du matériau quartzeux est utilisé à titre de poudre ou de granulat à grains fins.

9. Procédé selon l'une des revendications 1 à 8, caractérisé en ce que le noyau de matière synthétique renforcé par des fibres est chargé électrostatiquement avant application de la couche de revêtement en matière synthétique.

10. Procédé selon la revendication 9, caractérisé en ce que le matériau destiné à la couche de revêtement en matière synthétique est appliqué par pulvérisation ou par soufflage sur le noyau en matière synthétique, renforcé par des fibres et chargé électrostatiquement.

11. Procédé selon l'une des revendications 1 à 10, caractérisé en ce que la température nécessaire pour l'application de la couche de revêtement en matière synthétique sur la périphérie extérieure du noyau en matière synthétique renforcé par des fibres est établie par un chauffage par micro-ondes.

12. Procédé selon l'une des revendications 1 à 11, caractérisé en ce que la couche de revêtement de matière synthétique est appliquée par passage du noyau en matière synthétique chaud, en cours de durcissement, à travers un bain de matière synthétique pulvérulente fluidisée.
